(19) Europäisches Patentamt
European Patent Office
Office européen des brevets

(11) **EP 2 360 458 A2**

(12) **EUROPÄISCHE PATENTANMELDUNG**

(43) Veröffentlichungstag:
**24.08.2011 Patentblatt 2011/34**

(51) Int Cl.:
*G01G 19/00* (2006.01)   *G01G 19/414* (2006.01)
*G07B 17/00* (2006.01)

(21) Anmeldenummer: **11000602.0**

(22) Anmeldetag: **26.01.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **24.02.2010 DE 102010009431**

(71) Anmelder: **Francotyp-Postalia GmbH**
**16547 Birkenwerder (DE)**

(72) Erfinder:
• **Hübler, Uwe**
  **15366 Neuenhagen (DE)**
• **Kieser, Axel**
  **14165 Berlin (DE)**

(54) **Schnelle dynamische Waage und Verfahren zur Steuerung einer schnellen dynamischen Waage**

(57)    Die Erfindung betrifft eine schnelle dynamische Waage, mit einer Wiegeeinheit (20), bestehend aus einer Wiegezelle (204) und aus einem Transportmechanismus (201, 202, 203) mit einem ersten Motor (M1) zum Antrieb desselben, wobei der Transportmechanismus mit dem Motor (M1) auf der Wiegezelle angeordnet ist, wodurch die Wiegezelle mit einer Vorlast belastet wird, mit einem ersten Sensor (S1) am Beginn der Wiegeeinheit, der ein erstes Signal an eine Steuereinheit (22) abgibt, welche den Wägevorgang für ein Stückgut B startet, einem zweiten Sensor (S2) der ein zweites Signal an die Steuereinheit (22) abgibt, welche eine Mitteilung erzeugt, dass ein auf das Stückgut B folgendes Stückgut Bn zugeführt werden kann, wobei eine Wiegeeinheit (20) mit einer für das Wiegen wirksamen verkürzten Länge ($L_w$) vorgesehen wird, wobei durch die Verkürzung der Länge ($L_w$) der Abstand zwischen aufeinander folgenden Stückgütern entsprechend verkürzt ist, wobei eine schaltbare Abzugsvorrichtung (21, 24) in Transportrichtung nach der Wiegeeinheit (20) angeordnet ist sowie dass die Steuereinheit (22) zum Steuern des Stückguttransports mittels eines dritten Motors (M3) der Abzugsvorrichtung und zum Steuern der Abzugsvorrichtung in Abhängigkeit von der Länge des Stückgutes und von der Beendigung der Gewichtsermittlung im Ergebnis des Wägens ausgebildet ist, wobei die Abzugsvorrichtung mittels eines Aktors (M2, M4) schaltbar ist.

Fig. 5

EP 2 360 458 A2

**Beschreibung**

Die Erfindung betrifft eine schnelle dynamische Waage gemäß der im Oberbegriff des Patentanspruchs 1 angegebenen Art und ein Verfahren zur Steuerung einer schnellen dynamischen Waage gemäß der im Oberbegriff des Patentanspruchs 10 angegebenen Art: Die Erfindung gestattet ein schnelles Wägen von Stückgütern, wie zum Beispiel von Poststücken. Die Erfindung ist für den Einsatz in Postverarbeitungssystemen geeignet, die einen erhöhten Durchsatz aufweisen.

Bei der Postverarbeitung gibt es bereits verschiedene Lösungen im Bereich des dynamischen Wiegens. So bieten die Firmen Neopost und Pitney Bowes Tischgeräte für annähernd horizontal transportierende Systeme an, wobei die Poststücke flach auf der Rückseite liegend transportiert werden, damit auf die Vorderseite der Poststücke ein Frankerstempel aufgebracht werden kann.

Aus dem europäischen Patent EP 974 819 B1 der Anmelderin geht bereits eine Vorrichtung zum Wiegen von bewegtem Postgut, insbesondere von auf einer Kante stehend angeordneten Poststücken (Briefen) hervor. Ein von einem Motor angetriebenes Transportband läuft auf Laufrollen über einen Wiegeteller, der mit einer Führungswand zur Führung der Poststücke ausgestattet ist. Die Führungswand ist zur Führung der Poststücke ausgestattet und im Winkel von 108° zur Tischplatte geneigt.

Auf der Führungswand rutschen die Poststücke auf deren Vorderseite gekippt weiter, während das annähernd horizontal angeordnete Transportband weiter bewegt wird, auf welchem die Poststücke auf einer Kante stehend transportiert werden. Unter Poststücken sind zum Beispiel Postkarten, kuvertierte Briefe u.a. Postgüter bis 20 mm Dicke zu verstehen. Der Durchsatz bei dem zuletzt genannten System beträgt ca. 50 Briefe pro Minute bei dynamischer Wägung des Postgutes. Der Durchsatz einer Frankiermaschine bestimmt sich aus der Anzahl der Briefe pro Zeiteinheit und beträgt max. 150 Briefe pro Minute. Bei einer gegebenen Transportgeschwindigkeit und einem Briefabstand von der Briefvorderkante des einen zu der Briefvorderkante des nächstfolgenden kuvertierten Briefes (edge-to-edge), ergibt sich der Durchsatz aus dem Quotienten aus der Transportgeschwindigkeit und dem Briefabstand. Der Motor, das Transportband mit Laufrollen und der Wiegeteller mit Führungswand belasten eine Wiegezelle. Auf einer Wiegezelle sind der Wiegeteller mit dem Transportband und den Laufrollen sowie ein erster Motor so angeordnet, dass die Wiegezelle mit einer Vorlast belastet wird. Ein erster Sensor ist am Einlauf der Wiegeeinheit angeordnet, der ein erstes Signal an eine Steuereinheit abgibt, welche den Wägevorgang für einen Brief B startet. Außerdem ist ein zweiter Sensor am Auslauf der Wiegeeinheit vorgesehen, der ein zweites Signal an eine Steuereinheit abgibt, welche eine Mitteilung erzeugt, dass ein auf den Brief B folgender Nachfolgebrief Bn zugeführt werden kann. Die vorgenannten Komponenten bilden die dynamische Waage, die zusammen mit einer Frankiermaschine vom Typ Jetmail® in einem Frankiersystem der Anmelderin mit einer Systemgeschwindigkeit betrieben wird, welche den Durchsatz an Poststücken mitbestimmt.

Zur Durchsatzerhöhung durch Verkürzung des Abstands zwischen den Briefen ist aus der europäischen Patentanmeldung EP 2017589 A2 (= US 20090008859 A1) ein die Briefe annähernd horizontal transportierendes System bekannt, in welchem mindestens zwei Wiegeeinheiten hintereinander angeordnet sind. Kurze Briefe können in kurzem Abstand aufeinanderfolgend mittels einer ersten Wiegeeinheit gewogen werden, weil letzterer in der Länge auf die Länge der kurzen Briefe angepasst ist. Bei langen Briefen ist das Wiegeergebnis eine Superposition der Wiegeergebnisse beider Wiegeeinheiten. Nachteilig ist der höhere Aufwand gegenüber einem System mit nur einer einzigen Wiegeeinheit. Die Hintereinanderschaltung von mehreren Wiegeeinheiten macht einen deutlich erhöhten Rechenaufwand bei der Berechnung der Wiegewerte notwendig, der zeitkritisch werden kann. Es kann zu Schlupf-/Synchronisierungsproblemen zwischen den Wiegeeinheiten kommen, die zu Stößen führen können, die das Wiegeergebnis beeinflussen.

Eine weitere Lösung zur Durchsatzerhöhung besteht in einer parallelen Anordnung zweier Wiegeeinheiten, wie aus der europäischen Patentanmeldung EP 2.065.686 A1 (= US 20090139777 A1) hervor geht. Die Parallelschaltung zweier Wiegeeinheiten bringt das Problem des deutlich erhöhten Platzbedarfs aufgrund der beiden Einheiten zur Steuerung des Briefstroms, einen deutlich erhöhten Steuerungsaufwand sowie höhere Kosten mit sich. Außerdem sind noch zusätzliche Vorrichtungen zum Teilen und Zusammenführen des Briefstroms vor und hinter der Waage notwendig, was den Platzbedarf weiter in die Höhe treibt.

Ein Frankiersystem von der Francotyp-Postalia GmbH besteht mindestens aus einer automatischen Zuführstation, einer dynamischen Waage und einer im Poststrom nachgeschalteten Frankiermaschine. Für die Frankiermaschine vom Typ centormail® wird ein Transportsystem eingesetzt, bei dem nacheinander auf einer Kante stehende Poststücke transportiert werden. Bei Poststücken wie Briefen kann ein Briefspektrum mit Brieflängen von 140 mm bis 353 mm verarbeitet werden. So weisen Briefe im Format C6 lang eine mittlere Brieflänge von 229 mm auf. Kundenanforderungen an einen höheren Durchsatz des Frankiersystems mit der Frankiermaschine centormail® machen es erforderlich, dass entweder die Transportgeschwindigkeit für Poststücke, insbesondere für Briefe, im System erhöht oder der Abstand zwischen den Briefen verringert wird. Die praktisch notwendige Länge der Wiegeeinheit lässt sich jedoch nur durch Versuche ermitteln.

Der Erfindung liegt die Aufgabe zugrunde, für eine schnelle dynamische Waage mit einer Wiegeeinheit und bei einer gegebenen Transportgeschwindigkeit den Abstand zwischen den zu wiegenden Stückgütern zu verringern, um so den Durchsatz von Stückgütern zu erhöhen, beispielsweise um den Durchsatz von Briefen mit mittlerer Länge zu verdoppeln, ohne dass das zu verarbeitende Längenspektrum kleiner wird. Außerdem soll ein Verfahren zur Steuerung einer schnellen dynamischen Waage geschaffen werden.

Die Aufgabe wird mit den Merkmalen der schnelle dynamischen Waage gemäß Anspruch 1 und mit den Schritten des Verfahrens zur Steuerung einer schnellen dynamischen Waage gemäß Anspruch 10 gelöst.

Die schnelle dynamische Waage weist folgende Komponenten auf:

- eine Wiegeeinheit mit einer für das Wiegen wirksamen verkürzten Länge $L_W$. Durch die Verkürzung der Länge $L_W$ kann der Abstand zwischen aufeinander folgenden Stückgütern entsprechend verkürzt werden. Die Wägung langer Stückgüter kann dabei solange erfolgen, bis diese in Transportrichtung über die Wiegeeinheit hinaus stehen, wobei der Schwerpunkt der Stückgüter jedoch noch auf der Wiegeeinheit liegt,
- eine schaltbare Abzugsvorrichtung, welche in Transportrichtung nach der Wiegeeinheit angeordnet ist und die es durch ihre Länge und Positionierung erlaubt, sowohl die kürzesten, als auch die längsten Stückgüter von der Wiegeeinheit abzuziehen und weiter zu transportieren sowie
- eine Steuereinheit zum Steuern des Stückguttransports mittels eines dritten Motors M3 der Abzugsvorrichtung und zum Steuern der Abzugsvorrichtung in Abhängigkeit von der Länge des Stückgutes und von der Beendigung der Gewichtsermittlung im Ergebnis des Wägens, wobei die Abzugsvorrichtung mittels eines Aktors zum Weg- und Zuschalten oder zum Öffnen und Schließen der Abzugsvor-richtung schaltbar ist.

Der Aktor wandelt eine Eingangsgröße, d.h. einen elektrischen Strom, in eine andersartige Ausgangsgröße, d.h. eine Schaltbewegung um und erzielt damit das gewünschte Öffnen und Schließen bzw. Weg- und Zuschalten. Es ist vorgesehen, dass stromaufwärts die in der Länge verkürzte Wiegeeinheit in einem Abstand von einer automatischen Zuführstation angeordnet ist, welche Stückgüter zur dynamischen Waage zuführt, wobei ein Spektrum von Stückgütern unterschiedlicher Länge verarbeitet werden kann, wobei das Spektrum auch Stückgüter umfasst, die eine minimale Länge $L_{Bmin}$ aufweisen, dass der zweite Sensor von dem ersten Sensor am Einlauf der Wiegeeinheit mit einem ersten Abstand beabstandet ist und der zweite Sensor von der Achse der zweiten Laufrolle am Auslauf der Wiegeeinheit mit einem zweiten Abstand beabstandet ist, wobei sich die Länge der verkürzten Wiegeeinheit aus der Summe beider Abstände ergibt und dass ein dritter Sensor in einem dritten Abstand in Transportrichtung hinter dem Auslauf der Wiegeeinheit unmittelbar vor der Abzugsvorrichtung und sowie dass ein vierter Sensor in der Abzugsvorrichtung in einem vierten Abstand in Transportrichtung vom dritten Sensor angeordnet ist.

Optional kann stromabwärts der Wiegeeinheit in der Abzugsvorrichtung ein fünfter Sensor in einem fünften Abstand hinter dem vierten Sensor vorgesehen sein, der mit der Steuereinheit verbunden ist, um mittels der Steuereinheit ermitteln zu können, ob ein Stückgut eine definierte Wegstrecke in die Abzugsvorrichtung hinein transportiert worden ist.

Das Verfahren zur Steuerung einer schnellen dynamischen Waage weist folgende Schritte auf:

- Abgabe einer Mitteilung, wenn Stückgut zu der Wiegeeinheit zugeführt werden kann, wobei durch einen ersten Sensor S1 am Einlauf der Wiegeeinheit der Wiegevorgang gestartet wird, wenn das zu wiegende Stückgut B den ersten Sensor freigibt, dass die Beendigung des Wägevorgangs überwacht und die Zufuhr eines nachfolgenden Stückguts Bn zu der Wiegeeinheit gestartet und das nachfolgende Stückgut Bn dann zu der Wiegeeinheit zugeführt wird, wenn die Hinterkante des zuvor zugeführten Stückguts B eine Mindest-Auslöseposition an einem zweiten Sensor S2 erreicht hat und der Wägevorgang für das Stückgut B beendet ist,
- Steuerung der Abzugsvorrichtung, um letztere wegzuschalten, damit ein Stückgut B berührungslos in die Abzugsvorrichtung einfahren kann, wenn die Vorderkante des Stückguts B einen dritten Sensor S3 erreicht, der im Abstand hinter dem Auslauf der Wiegeeinheit unmittelbar vor der Abzugsvorrichtung angeordnet ist.
- Steuerung der Abzugsvorrichtung, um letztere hinzuzuschalten, damit ein Stückgut B durch die Abzugsvorrichtung hindurch transportiert werden kann, wenn die Vorderkante des Stückguts B eine Mindest-Zuschaltposition an einem vierten Sensor S4 erreicht und der Wägevorgang des Stückguts B beendet ist.

Weitere Schritte sind:

- Umschalten von einem dynamischen in einen halbdynamischen Wiegemodus, wenn der Wägevorgang des Stückguts B noch nicht beendet und wenn das Stückgut B eine definierte Wegstrecke in die Abzugsvorrichtung hinein transportiert worden ist, wobei die in den halbautomatischen Wägemodus umgeschaltete dynamische Waage folgende Schritte ausführt:

    a) Hinzuschalten der Abzugsvorrichtung,
    b) Stoppen des Transports des Stückguts in der Waage,
    c) Zurücktransport des Stückguts auf die Wiegeeinheit,

d) Statisches Wägen des Stückguts,

e) Weitersteuerung der Wiegeeinheit und der Abzugsvorrichtung zum Auswurf des Stückguts.

Unter einem statischen Wägen des Stückguts soll ein Wägen des unbewegten ruhenden Stückguts verstanden werden. Unter Stückgüter fallen u.a. Poststücke wie zum Beispiel Postkarten, kuvertierte Briefe u.a. Postgüter. Wenn in den Ausführungsbeispielen vereinfachend der Begriff Brief verwendet wird, sind kuvertierte Briefe gemeint, jedoch sollen andere Poststücke bzw. Stückgüter damit nicht ausgeschlossen werden.

Zur Weitersteuerung der Wiegeeinheit werden folgende Schritte durchgeführt:

- Start des Transports des Stückgutes B auf der Wiegeeinheit in Transportrichtung,
- Abfragen, ob während des Transports die Hinterkante des Stückgutes B den Bereich des zweiten Sensors S2 verläßt und in dem Falle, wenn festgestellt wurde, dass die Hinterkante des Stückgutes B den Bereich des zweiten Sensors S2 verläßt, wird eine Meldung generiert und an die automatische Zuführstation ausgegeben, damit ein nachfolgenden Stückgut Bn zugeführt wird.

Zur Weitersteuerung der Abzugsvorrichtung zum Auswurf des Stückguts werden folgende Schritte durchgeführt:

- Abfragen, ob die Briefvorderkante des Stückgutes B den Sensor S3 erreicht hat,
- Wegschalten der Abzugsvorrichtung in der Art, dass das Stückgut B berührungslos in die Abzugsvorrichtung einfahren kann,
- Abfragen, ob die Briefvorderkante des Stückgutes B den Sensor S4 erreicht hat,
- Hinzuschalten der Abzugsvorrichtung und
- Transport des Stückgutes durch die Abzugsvorrichtung hindurch und heraus.

In Richtung des Stückgutstromes (Poststromes) folgt eine schaltbare Abzugsvorrichtung nach der verkürzten Wiegeeinheit. Diese Lösung lässt sich vorteilhaft auf dem gleichen Bauraum, d.h. im gleichen Gehäuse derjenigen dynamische Waage realisieren, die seit dem Jahre 2006 für ein Frankiersystem mit der Frankiermaschine centormail® angeboten wird. Die Erfindung kann für dynamische Waagen eingesetzt werden, sowohl für solche, die einen auf der Kante stehenden Brief transportieren, als auch solche, die einen auf der flachen Seite liegenden Brief transportieren. Vorteilhaft wird ein deutlich höherer Briefdurchsatz bereits auch ohne eine Erhöhung der Systemgeschwindigkeit erreicht.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1,       Perspektivische Darstellung eines bekannten Frankiersystem mit einer dynamischen Waage von vorn oben rechts,

Figur 2,       Draufsicht auf eine schnelle dynamische Waage (x/z-Ebene),

Figur 3,       Schnittdarstellung durch eine Abzugsvorrichtung nach einer ersten Ausführungsvariante, wobei die Abzugsvorrichtung im weggeschwenkten Zustand und parallel zu der x/y-Ebene geschnitten ist,

Figur 4,       Prinzipdarstellung der Wiegeeinheit der schnellen dynamischen Waage in Seitenansicht (y/z-Ebene),

Figur 5,       Prinzipdarstellung der schnellen dynamischen Waage in Seitenansicht (y/z-Ebene), mit einer Wiegeeinheit, mit einer Abzugsvorrichtung nach einer zweiten Ausführungsvariante und mit weiteren Komponenten,

Figur 6a und 6b,   Darstellung der Abzugsvorrichtung nach der zweiten Ausführungsvariante, im geöffneten und im Schließ-Zustand mit Blick von links auf die x/y-Ebene,

Figur 6c,       Ansicht der Abzugsvorrichtung von oben auf die x/z-Ebene,

Figur 7a und 7b,   Schnittdarstellung durch die Abzugsvorrichtung nach der zweiten Ausführungsvariante, wobei die Abzugsvorrichtung im geöffneten Zustand einerseits und und im Schließ-Zustand andererseits gezeichnet und parallel zu der x/y-Ebene geschnitten ist,

Figur 8, Ablaufplan der schnellen dynamischen Waage.

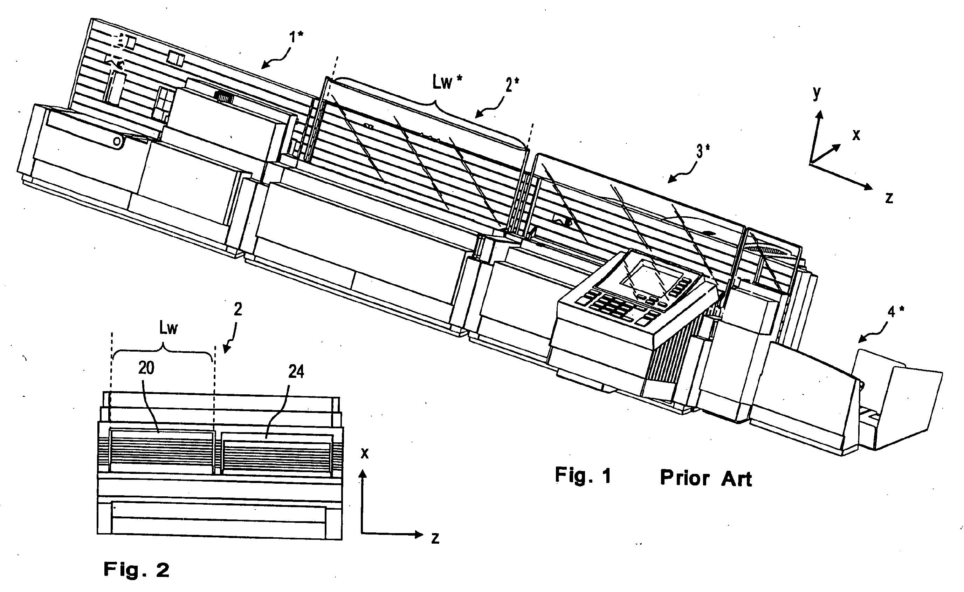

In der Figur 1 wird eine perspektivische Darstellung eines bekannten Frankiersystems mit einer dynamischen Waage von vorn oben rechts gezeigt. Das Frankiersystem steht beispielsweise auf einem Tisch (nicht gezeigt), dessen Tischplatte parallel zu einer x/z-Ebene eines kartesischen Koordinatensystems liegt. Das Frankiersystem der Francotyp-Postalia GmbH besteht aus einer automatischen Zuführstation 1*, einer dynamischen Waage 2*, einer Frankiermaschine 3* und einer im Poststrom nachgeschalteten Ablage 4*. Die Breite in x-Richtung einer schnellen dynamischen Waage konnte dadurch minimiert werden, weil die Poststücke auf einer Kante stehend in Transportrichtung z transportiert werden. Die Breite der Wiegeeinheit beträgt 315 mm in x-Richtung. Zum Wiegen von Poststücken bei hoher Transportgeschwindigkeit ist ein Wiegeteller erforderlich, dessen horizontale Länge Lw* mindestens gleich ist der Summe aus der Länge, die das zu wiegende Poststück maximaler Länge in Transportrichtung aufweist und derjenigen Länge Ls, die sich aus dem Produkt der Transportgeschwindigkeit und der Messzeit für den längsten Brief ergibt. Die maximale Länge der Wiegeeinheit ist durch die Baulänge der dynamischen Waage in Transportrichtung z begrenzt. Die Länge Lw* der Wiegeeinheit könnte deshalb eine minimale Länge von 353 mm + Ls haben, aber beträgt 540 mm, denn die Baulänge der ersten drei Stationen 1*, 2* und 3* des Frankiersystems ist gleich und beträgt 550 mm.

Die Figur 2 zeigt eine Draufsicht auf eine schnelle dynamische Waage. Die Komponenten der schnellen dynamischen Waage 2 sind eine Wiegeeinheit 20 und eine im Poststrom nachfolgend angeordnete Abzugsvorrichtung 24. Die Länge Lw der Wiegeeinheit der schnellen dynamischen Waage 2 in Transportrichtung z liegt im Bereich von 300 mm bis 380 mm. Deren maximale Länge ist durch die Baulänge der Abzugsvorrichtung 24 in Transportrichtung z begrenzt, die innerhalb der schnellen dynamischen Waage angeordnet ist. Bei einer Baulänge der schnellen dynamischen Waage in Transportrichtung z von L = 550 mm liegt die Baulänge der Abzugsvorrichtung 24 in Transportrichtung z im Bereich von 170 mm bis 250 mm. Die Lösung lässt sich vorteilhaft auf dem gleichen Bauraum, d.h. im gleichen Gehäuse derjenigen dynamische Waage realisieren, die seit dem Jahre 2006 für ein Frankiersystem mit der Frankiermaschine centormail® angeboten wird.

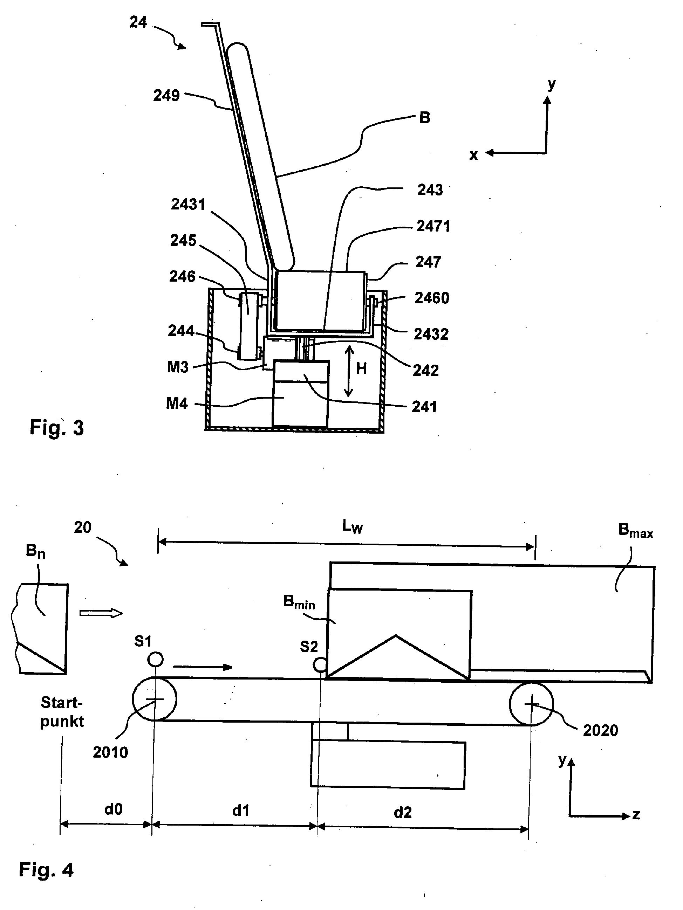

Die Figur 3 zeigt eine Schnittdarstellung durch eine Abzugsvorrichtung nach einer ersten Ausführungsvariante, wobei die Abzugsvorrichtung im weggeschwenkten Zustand und parallel zu der x/y-Ebene geschnitten gezeichnet ist. Die schaltbare Abzugsvorrichtung 24 ist poststromabwärts unmittelbar nach der verkürzten Wiegeeinheit angeordnet, welche durch eine - nicht gezeigte - Steuereinheit steuerbar vom Brief weg schwenkbar und an den Brief heran schwenkbar und dazu ausgebildet ist, um letztere weiter poststromabwärts zu transportieren.

Die Abzugsvorrichtung nach Figur 3 weist eine Halterung für einen schaltbaren Transportmechanismus auf. Die Halterung 243 hat u-förmig angeformte Winkelstücke 2431 und 2432 mit Löchern für eine Welle 2460 einer Laufrolle 247, auf der ein Laufbelag bzw. Transportband 2471 läuft. Am Boden der Halterung 243 ist ein Motor M 3 befestigt, auf dessen drehbarer Antriebswelle ein erstes walzenförmiges Riemenrad 244 befestigt ist. Auf der Welle 2460 ist ein zweites walzenförmiges Riemenrad 246 befestigt. Die Riemenräder sind drehbeweglich gelagert und über einen Antriebsriemen 245 gekoppelt.

Die Abzugsvorrichtung 24 weist eine Führungswand 249 auf, die nahe der Rückseite der schnellen dynamischen Waage an dem einen Winkelstück 2431 der Halterung 243 angeformt ist. Auf der Führungswand 249 liegt die Rückseite eines Briefes B auf, der mit seiner Kante auf dem Transportband 2471 stehend transportiert wird, wenn der Motor M3 entsprechend angesteuert wird. Die Abzugsvorrichtung 24 ist durch eine nicht gezeigte Steuereinheit über einen Aktor in zwei Zustände schaltbar. Der Aktor besteht beispielsweise aus einem Motor M4 mit einem aufgesetzten Getriebe 241, welches die Drehbewegung der Motorwelle in eine Hubbewegung H umformt. Letztere wird durch eine Hubstange 242 auf den Boden der Halterung übertragen.

Die Figur 4 zeigt eine Prinzipdarstellung der Wiegeeinheit der schnellen dynamischen Waage in Seitenansicht (y/z-Ebene). Zwei Briefe sind nur deshalb gemeinsam auf einem Transportband einer verkürzten Wiegeeinheit 20 stehend gezeichnet, um die Auswirkungen der Brieflängenunterschiede auf das dynamische Wiegen zu verdeutlichen. Nur für den ersten Brief Bmin mit der minimalen Brieflänge ist sichergestellt, dass er vollständig während des dynamischen Wiegens auf der verkürzten Wiegeeinheit 20 verweilt. Während der erste Brief Bmin noch sicher auf dem Transportband steht, ragt der zweite Brief Bmax, der eine maximale Brieflänge aufweist, bereits über das Transportband hinaus, bevor das dynamische Wiegen beendet wird. Im Betrieb der schnellen dynamischen Waage steht aber auf der Wiegeeinheit 20 natürlich immer nur ein Brief, damit das Wiegeergebnis nicht verfälscht wird.

Die verkürzte Wiegeeinheit 20 hat zwei Laufrollen für das Transportband und zwischen den Achsen 2010 und 2020 der beiden Laufrollen eine für das Wiegen wirksame Länge Lw, beispielsweise von Lw = 330 mm. Ein erster Sensor S1 ist in y-Richtung über der ersten Achse der ersten Laufrolle angeordnet und hat einen Abstand d0 von einem Startpunkt bzw. von der vorderen Kante eines nachfolgenden Briefes Bn. Ein zweiter Sensor S2 ist in y-Richtung über dem Transportband angeordnet und hat einen ersten Abstand d1 von dem ersten Sensor S1 in Transportrichtung z sowie einen ebenso in Transportrichtung z gelegenen zweiten Abstand d2 von dem zweiten Sensor S2 bis zum Ende der für das Wiegen wirksamen Länge Lw der Wiegeeinheit. Der Brief mit der maximalen Brieflänge Bmax, der bereits über das Transportband hinausragt, würde bei einem Weitertransport in Transportrichtung z aufgrund der Schwerkraftwirkung abkippen. In Transportrichtung z des Poststromes folgt deshalb auf die einzige verkürzte Wiegeeinheit eine schaltbare Abzugsvorrichtung, deren Aufbau nach einer ersten Variante bereits anhand der Figur 3 erläutert wurde.

Der erste Sensor S1 am Einlauf der Wiegeeinheit 20 gibt ein Signal zum Starten des Wiegevorgangs ab, wenn der zu wiegende Brief B1 den Sensor S1 freigibt. Das ist bei einem als Sensor S1 eingesetzten Durchlichtsensor dann der Fall, wenn der Lichtstrahl nicht mehr durch den Brief unterbrochen wird, d.h. wenn die Hinterkante des Briefes die Position des Sensors S1 hinter sich gelassen hat. Die Position eines zweiten Sensors S2 liegt poststromabwärts der Position des ersten Sensors S1. Der zweite Sensor S2 ist in einem ersten Abstand d1 vom ersten Sensor S1 und in einem zweiten Abstand d2 vom Auslauf der Wiegeeinheit angeordnet. Der erste Abstand d1 ist so bemessen, dass bei einer bestimmten Transportgeschwindigkeit der automatischen Zuführstation die Briefvorderkante eines nächstfolgenden weiteren Briefes Bn die Wiegeeinheit erst dann erreicht, wenn der erste Brief Bmin die Wiegeeinheit bereits verlassen hat. Es gilt:

$$d1 = Lw - d2 \qquad\qquad (1)$$

und

$$d2 = d0 + L_{Bmin} \qquad\qquad (2)$$

Die Wiegeeinheit weist beispielsweise bei der Systemgeschwindigkeit $V_S$ = 680 mm/s eine Länge Lw = 330 mm auf, der kürzeste Brief hat die Länge $L_{Bmin}$ = 140 mm und der Abstand vom Startpunkt des Folgebriefes beträgt d0 = 48 mm.

Damit ergeben sich für den ersten Abstand d1 = 142 mm und für zweiten Abstand d2 = 188 mm.

Die Länge der Wiegeeinheit kann im Bereich Lw = 300 mm bis 380 mm variieren. Dabei ist bei einer höheren Systemgeschwindigkeit auch die Länge der Wiegeeinheit erhöht, wobei das Verhältnis d1/d2 annähernd gleich bleibt.

Die automatische Zuführstation und die dynamische Waage sind als sogenannte intelligente Peripheriegeräte für die Frankiermaschine ausgeführt, d.h. diese Peripheriegeräte weisen jeweils eine eigene Steuereinheit und Schnittstellen auf, über welche die automatische Zuführstation und die dynamische Waage im Frankiersystem miteinander kommunizieren. Messwertdaten und Sensorsignale, die in der automatischen Zuführstation ermittelt werden, können über die Schnittstellen zur dynamischen Waage übermittelt werden und ebenso umgekehrt kann auch eines der Sensorsignale aus der dynamischen Waage zur automatischen Zuführstation übermittelt werden. Die Steuereinheit der dynamischen Waage generiert eine entsprechende Mitteilung.

Die automatische Zuführstation startet aufgrund einer solchen Übermittlung von Daten und Signalen die Briefzufuhr des nachfolgenden Briefes Bn, wenn der Wägevorgang für den ersten Brief Bmin bzw. zweiten Brief Bmax beendet ist und wenn der erste Brief Bmin bzw. zweiten Brief Bmax auch den zweiten Sensor S2 freigibt, d.h. die Hinterkante des ersten Briefes Bmin bzw. zweiten Briefes Bmax die Position des zweiten Sensors S2 hinter sich gelassen hat. Durch die verkürzte Länge $L_w$ der Wiegeeinheit in Kombination mit der beschriebenen Ablaufsteuerung lässt sich ein deutlich kürzerer Briefabstand und somit ein deutlich höherer Briefdurchsatz ohne eine Erhöhung der Systemgeschwindigkeit erreichen.

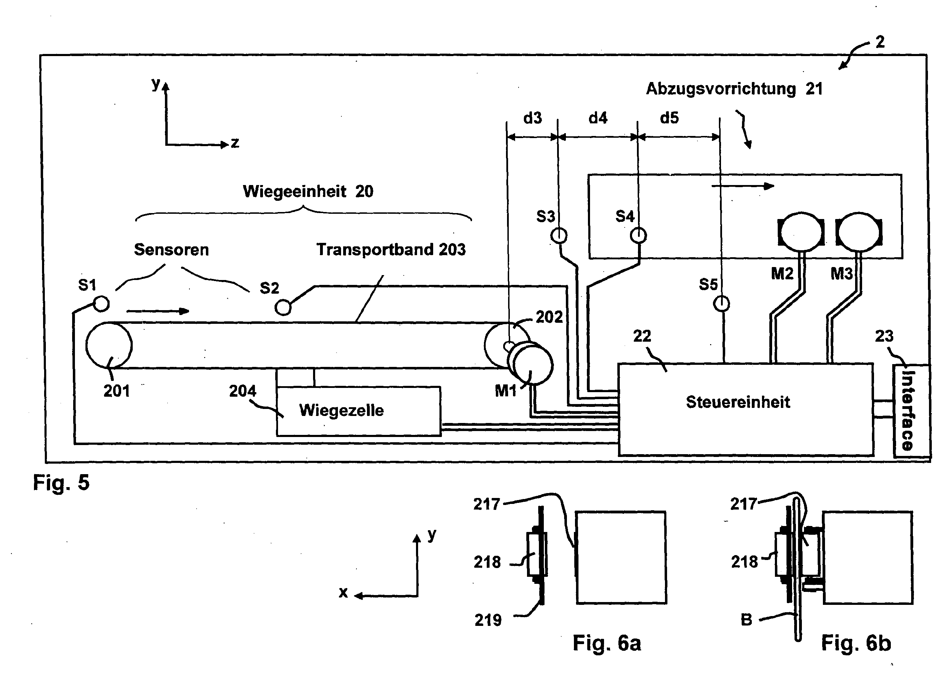

In der Figur 5 wird eine Prinzipdarstellung der schnellen dynamischen Waage 2 in Seitenansicht (y/z-Ebene), mit einer Wiegeeinheit, mit einer Abzugsvorrichtung nach einer zweiten Ausführungsvariante und mit weiteren Komponenten gezeigt. Die Wiegeeinheit 20 weist wieder erste und zweite Rollen 201, 202 für ein Transportband 203 auf, wobei die zweite Rolle 202 von einem ersten Motor angetrieben wird. Die Komponenten 201 bis 203 sind auf Wiegezelle 204 angeordnet und belasten diesen mit einem Gewicht. Über der Achse der ersten Rolle 201 ist der erste Sensor S1 und über dem Transportband 203 ist der zweite Sensor S2 in Transportrichtung z in einem Abstand angeordnet, der mindestens einer Länge $L_{Bmin}$ des kürzesten Briefes plus einem Sicherheitsabstand entspricht, der mit der Systemgeschwindigkeit wächst.

Die Sensoren S1, S2 und der erste Motor M1 sowie die Wiegezelle 204 sind mit einer Steuereinheit 22 mess- und steuerungsmäßig verbunden, beispielsweise elektrisch über entsprechende Leitungen.

Poststromabwärts unmittelbar nach der verkürzten Wiegeeinheit ist eine schaltbare Abzugsvorrichtung 21 gemäß der zweiten Ausführungsvariante angeordnet, welche durch die Steuereinheit steuerbar zum Öffnen und Schließen ausgebildet ist und die Briefe an der flachen Seite greift sowie dazu ausgebildet ist, um letztere weiter zu transportieren. Die Transportrichtung z ist durch einen Pfeil verdeutlicht. Es ist vorgesehen, dass ein dritter Sensor S3 in einem dritten Abstand hinter dem Auslauf der Wiegeeinheit unmittelbar vor der Abzugsvorrichtung und sowie dass ein vierter Sensor S4 in der Abzugsvorrichtung in einem vierten Abstand vom dritten Sensor angeordnet ist. Der dritte Sensor S3 ist von der Achse der zweiten Laufrolle am Auslauf der Wiegeeinheit im dritten Abstand d3 = 0 bis 50 mm und der vierte Sensor S4 ist von dem dritten Sensor S3 im vierten Abstand d4 = 20 bis 80 mm angeordnet Die weiteren Sensoren S3, S4 ggf. S5 und weitere Motoren M2, M3 sowie ein I/O-Interface 23 zur Ein- und Ausgabe von Daten sind ebenfalls mit der Steuereinheit 22 mess- und steuerungsmäßig sowie kommunikativ verbunden. Durch den dritten Sensor S3 und vierten Sensor S3 gegebenfalls zusätzlich durch einen fünften Sensor S5 werden Signale an die Steuereinheit 22 übermittelt zur Steuerung der Motoren M2 und M3 der steuerbaren Abzugsvorrichtung 21. Der Sensor S3 signalisiert, wenn die Briefvorderkante eine Wegschaltposition der Abzugsvorrichtung erreicht. Der Sensor S4 signalisiert, ob von der Briefvorderkante eine Mindest-Zuschaltposition der Abzugsvorrichtung erreicht wird.

Die Steuereinheit der dynamischen Waage steuert einerseits die Wiegeeinheit und andererseits eine zuschaltbare Abzugsvorrichtung, welche die Aufgabe löst, einen gerade gewogenen Brief vom Wiegeteller abzuziehen bzw. aufzufangen und an die Frankiermaschine weiterzugeben.

Die Steuerung der Abzugsvorrichtung erfolgt nach dem folgenden Verfahren:

i) Detektieren der Briefvorderkante eines Briefes und Vorbereiten des Auffangens, wobei die Abzugsvorrichtung geöffnet bzw. weggeschaltet wird, so dass der Brief berührungslos in die Abzugsvorrichtung einfahren kann, wenn die Briefvorderkante des Briefes den dritten Sensor S3 erreicht, der direkt vor der Abzugsvorrichtung angeordnet ist.

ii) Schließen bzw. Zuschalten der Abzugsvorrichtung unter folgenden Bedingungen:

a) Der Wägevorgang für den Brief ist beendet und
b) Die Vorderkante des Briefs hat den vierten Sensor S4, d.h. eine Mindestzuschaltposition der Abzugsvorrichtung erreicht.

Der oben beschriebene Ablauf betrifft einen Brief mit kurzer, mittlerer oder langer Brieflänge. Die Steuereinheit 22 bereitet das Auffangen durch eine entsprechende Ansteuerung der Motoren M2 bzw. M4 (Variante nach Fig.3) vor. Der Motor M2 bewirkt das Öffnen bzw. der Motor M4 bewirkt das Wegschalten der Abzugsvorrichtung. Die Steuereinheit steuert das Schließen bzw. Zuschalten der Abzugsvorrichtung beim Auftreten der vorgenannten Bedingungen so, dass der Motor M2 das Schließen bzw. der Motor M4 das Zuschalten der Abzugsvorrichtung bewirkt. Der Motor M3 bewirkt den Brieftransport in der Abzugsvorrichtung, in einer von der Steuereinheit bestimmten Richtung.

Insbesondere wenn der Wägevorgang eines langen Briefs noch nicht beendet ist und dessen Vorderkante den vierten Sensor S4, d.h. die Mindest-Zuschaltposition der Abzugsvorrichtung, bereits erreicht hat, dann ist außerdem ein Abfragen einer Brieflängeninformation, die vorher ermittelt wurde oder ein Abfragen eines fünften Sensors S5 erforderlich. Der fünfte Sensor S5 ist an der Abzugsvorrichtung in Transportrichtung z in einem fünften Abstand vom vierten Sensor angeordnet. Alternativ kann eine Längeninformation für den Brief mittels einer entsprechenden Mess- oder Einstelleinrichtung vorher ermittelt oder eingestellt werden, beispielsweise kann dazu eine Längenmessung aus der automatischen Zuführstation verwendet werden, um rechnerisch ermitteln zu können, wieweit der Brief B in die Abzugsvorrichtung hinein transportiert worden ist.

In beiden Ausführungsvarianten erfolgt dann ein Umschalten des Modus für dynamisches Wiegen auf einen Modus für ein halbdynamisches Wiegen, wenn eine entsprechende Information vorliegt, aus der eine Überlänge hervorgeht oder wenn ein Signal des fünften Sensors S5 ein beginnendes Kippen des Briefes signalisiert. Der unvollständig gewogene Brief wird auf den Wiegeteller zurückgefahren und die Messung wird durch halbdynamisches Wiegen ermittelt. Bei einem durch ein halbdynamisches Wiegen gekennzeichnetes Wiegen werden natürlich geringere Durchsätze erreicht als beim rein dynamischen Wiegen.

Anderenfalls kann auch bei langen Briefen ein dynamisches Wiegen noch rechtzeitig zum Ergebnis führen, d.h. bevor der Brief kippt. Einen entscheidenden Einfluß haben das Gewicht und der Schwerpunkt des Briefes darauf, ob rechtzeitig ein plausibles Mess-Ergebnis vorliegt. Die Länge des Wiegetellers wurde auch deshalb empirisch ermittelt.

Auf die mechanische Funktion der Abzugsvorrichtung 21 nach der zweiten Ausführungsvariante wird in den Figuren 6a und 6b weiter eingegangen.

Die Figuren 6a und 6b zeigen eine Schnittdarstellung durch eine Abzugsvorrichtung 21 nach der zweiten Ausführungsvariante, wobei der Schnitt parallel zu x/y-Ebene verläuft. Die Figur 6a zeigt eine Abzugsvorrichtung mit geöffneten Abzugswalzenpaar 217, 218. Die Walze 218 ist beispielsweise an einer Führungswand 219 und die Walze 217 ist im Gehäuse der Abzugsvorrichtung 21 schaltbar angeordnet.

Die Figur 6b zeigt eine Darstellung der Abzugsvorrichtung nach der zweiten Ausführungsvariante, mit geschlossenen Abzugswalzenpaar 217, 218. Beide Abzugswalzen 217, 218 bilden eine Klemme zum Halten eines Briefes B und transportieren diesen weiter in Transportrichtung.

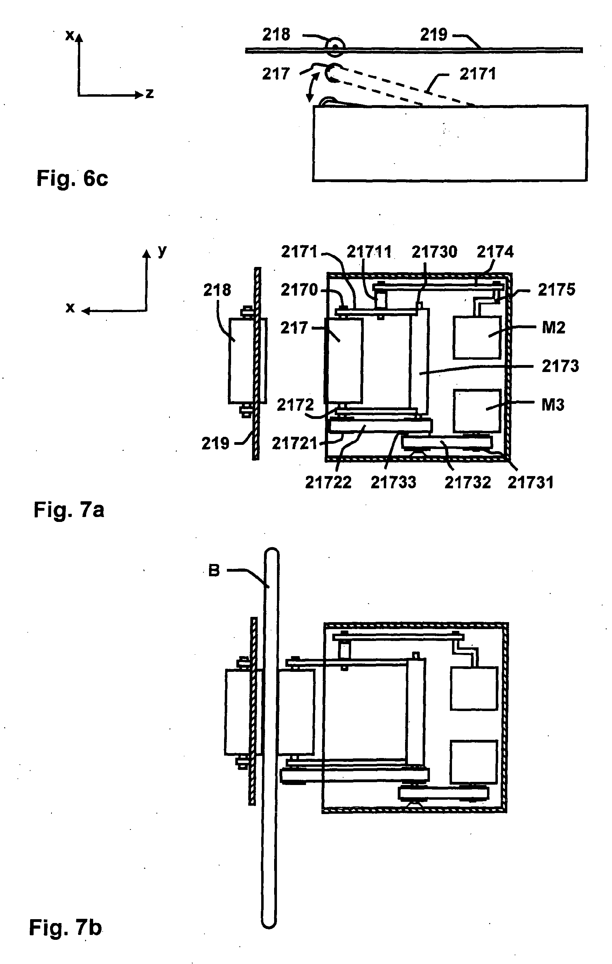

In der Figur 6c wird eine Ansicht der Abzugsvorrichtung von oben auf die x/z-Ebene im geöffneten bzw. im Schließ-Zustand (gestrichelt gezeichnet) dargestellt. Die Abzugswalze 218 ist an der Führungswand 219 und die Abzugswalze 217 ist im Gehäuse der Abzugsvorrichtung 21 schaltbar angeordnet.

Mindestens eine der Abzugswalzen ist auf einem Arm angeordnet, der eine Schwenkbewegung um eine Achse vollführen kann, die im Brieflauf stromabwärts angeordnet ist. Ein Arm 2171 ist im Schließ-Zustand ausgefahren bzw. vorgeschwenkt und weist beispielsweise eine angetriebene Abzugswalze 217 auf. Die Abzugswalze 217 ist dabei am Ende eines Arms 2171 angeordnet, der schwenkar ist. Der an die Abzugswalze 218 herangeschwenkte Arm 2171 ist gestrichelt gezeichnet dargestellt.

Alternativ können jede der beiden Abzugswalzen auf je einem schwenkbaren Arm angeordnet sein und jeweils einen Mechanismus aufweisen, der es ermöglicht eine Hubbewegung auszuführen.

In den Figur 7a und 7b wird eine Schnittdarstellung durch die Abzugsvorrichtung nach der zweiten Ausführungsvariante gezeigt, wobei die Abzugsvorrichtung parallel zu der x/y-Ebene geschnitten dargestellt ist. Die Abzugswalze 218 ist nicht angetrieben und drehbar an der Führungswand 219 angeordnet. Die Abzugswalze 217, die der nicht angetriebenen Abzugswalze 218 gegenüber liegend drehbar gelagert ist, wird angetrieben und kann mittels eines Mechanismus auf die nicht angetriebene Abzugswalze 218 zu und weg bewegt werden. Die Abzugswalzen 217 und 218 bilden ein Walzenpaar mit einem Klemmspalt in der x/y-Ebene. Die anschaltbare angetriebene Walze 217 ist zwischen zwei Armen 2171, 2172 auf einer drehbaren Welle 2170 angeordnet. Die Welle 2170 ist jeweils an den freien Enden der Arme angeordnet, deren andere Enden an einen Grundkörper 2173 angeformt sind, der um eine Welle 21730 schwenkbar gelagert ist, wobei die Welle 21730 im Gehäuse der Abzugsvorrichtung 21 befestigt ist. Durch einen zweiten Motor M2 wird das Schwenken der Arme 2171, 2172 und durch einen dritten Motor M3 wird eine gewünsche Drehrichtung der angetriebene Abzugswalze 217 erzeugt, wobei die Motoren M2 und M3 über die - nicht gezeigte - Steuereinheit angesteuert werden. Die Motorwelle des zweiten Motors M2 ist mit einer Kurbel 2175 fest verbunden. Auf dem freien Ende der Kurbel 2175 ist ein erstes Ende eines Pleuels 2174 drehbeweglich angebracht, deren zweites Ende auf ein Federteil 21711 wirkt, welches mit dem einem Arm 2171 gekoppelt ist, um letzeren zu schwenken, wenn die Kurbel gedreht wird.

Auf dem Ende der Welle 2170, welches in der Nähe des anderen Arms 2172 liegt, ist eine erste angetriebene Rolle 21721 befestigt, die über einen ersten Riemen 21722 angetrieben wird. Der erste Riemen 21722 ist über eine zweite Rolle 21733 gelegt, die auf der Welle 21730 drehbar gelagert angeordnet ist. Auf einer Motorwelle eines dritten Motors M3 ist eine erste Antriebsrolle 21731 befestigt, über welche ein zweiter Riemen 21732 läuft. Der zweite Riemen 21732 läuft ebenfalls über die zweite Rolle 21733 und versetzt letztere bei Bedarf in eine Drehung und treibt diese und somit die Abzugswalze 217 der Abzugsvorrichtung an. Die Abzugsvorrichtung ist in der Figur 7a im geöffneten Zustand dargestellt.

Die Abzugsvorrichtung ist in der Figur 7b im Schließ-Zustand gezeichnet. Die nicht angetriebene Abzugswalze 218 und die herangeschwenkte angetriebene Abzugswalze 217 bilden ein Klemmwalzenpaar zwischen das ein Brief B geklemmt ist. Der Brief B kann durch das Walzenpaar vor in Richtung z des Poststromes und bei Bedarf auch zurück transportiert werden.

Alternativ kann in einer weiteren Ausführungsvariante die Abzugswalze 218 angetrieben werden und die herangeschwenkte Abzugswalze 217 nicht angetrieben sein.

Alternativ können in einer weiteren Ausführungsvariante beide Abzugswalzen 217 und 218 angetrieben werden, um einen Brief zu transportieren.

Alternativ kann die Abzugswalze 218 an der Führungswand 219 schaltbar angeordnet und die Abzugswalze 217 im Gehäuse der Abzugsvorrichtung 21 ist nicht schaltbar wird aber angetrieben.

Alternativ kann die Abzugswalze 218 an der Führungswand 219 schaltbar angeordnet sein und wird angetrieben. Die Abzugswalze 217 im Gehäuse der Abzugsvorrichtung 21 ist weder schaltbar noch angetrieben.

Alternativ können in einer weiteren Ausführungsvariante beide Abzugswalzen 217 und 218 herangeschwenkt werden und mindestens eine wird angetrieben.

Alternativ können in einer weiteren Ausführungsvariante beide Abzugswalzen 217 und 218 durch Förderbänder oder geeignete Mittel ersetzt werden, um einen Brief zu transportieren.

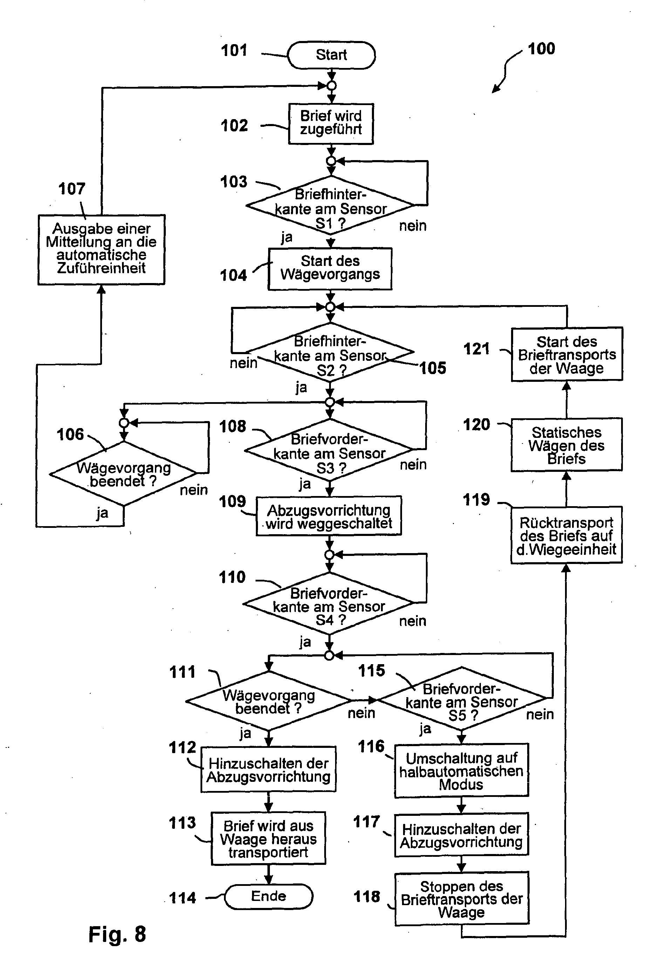

Anhand der Figur 8 wird ein Ablaufplan 100 zum Betreiben der schnellen dynamischen Waage erläutert. Nach dem Starten des Frankiersystems in einem ersten Schritt 101 folgt ein zweiter Schritt 102 in welchem ein Brief B aus der automatischen Zuführstation kommend der dynamischen Waage zugeführt und dann weiter in Transportrichtung transportiert wird. Im nachfolgenden Abfrageschritt 103 wird der erste Sensor S1 von der Steuereinheit der dynamischen Waage abgefragt, um festzustellen, ob während des Transports die Hinterkante des Briefes den Bereich des ersten Sensors S1 verläßt. Trifft das zu, dann wird im folgenden Schritt 104 der Wägevorgang gestartet. Anderenfalls, wenn das nicht zutrifft, dann wird auf den Beginn des Abfrageschritts 103 zurückverzweigt. Nach dem Start des Wägevorgang im Schritt 104 wird ein weiterer Abfrageschritt 105 erreicht, in welchem der zweite Sensor S2 von der Steuereinheit abgefragt wird, um festzustellen, ob während des Transports die Hinterkante des Briefes B den Bereich des zweiten Sensors S2 verläßt. Trifft das zu, dann wird einerseits ein folgender Abfrageschritt 106 erreicht, in welchem der von der Steuereinheit abgefragt wird, ob der Wägevorgang beendet ist. In diesem Falle, wenn festgestellt wurde, dass der Wägevorgang beendet worden ist, wird im Schritt 107 eine Meldung generiert und an die automatische Zuführstation ausgegeben. Nach dem Schritt 107 wird auf den Beginn des zweiten Schrittes 102 zurückverzweigt und ein nachfolgender Brief Bn kann der Wiegeeinheit zugeführt werden, da der Wägevorgang für den Brief B beendet ist. Der Brief B wird unterdessen weiter zu der Abzugsvorrichtung transportiert. Die Abfrage durch den Abfrageschritt 106 wird wiederholt und solange das nicht zutrifft, dass der Wägevorgang beendet ist, wird auf den Beginn des Abfrageschritts 106 zurückverzweigt. Während der Abfrage wird der Brief natürlich dennoch weiter transportiert und erreicht mit seiner Vorderkante den dritten Sensor S3 am Eingang der Abzugsvorrichtung. Deshalb wird durch einen Abfrageschritt 108 eine weitere Abfrage erforderlich, ob während des Transports die Vorderkante des Briefes B den Bereich des dritten Sensors S3 erreicht hat. Trifft das zu, dann wird ein folgender Schritt 109 erreicht, in welchem die Abzugsvorrichtung weggeschaltet bzw. das Abzugsrollenpaar geöffnet wird. Anschließend wird in einem weiteren Abfrageschritt 110 abgefragt, ob während des Transports die Vorderkante des Briefes B den Bereich des vierten Sensors S4 erreicht hat. Trifft das zu, dann wird ein nachfolgender Abfrageschritt 111 erreicht, in welchem abgefragt wird, ob der Wägevorgang beendet ist. Trifft das zu, dann wird ein folgender Schritt 112 erreicht, in welchem die Abzugsvorrichtung hinzugeschaltet bzw. das Abzugsrollenpaar geschlossen wird, um den Brief B weiter zu transportieren. Im anschließenden Schritt 113 wird der Brief B aus der Waage heraus zur Frankiermaschine transportiert und der Ablauf wird im Schritt 114 beendet.

Wird jedoch im Abfrageschritt 111 festgestellt, dass der Wägevorgang noch nicht beendet ist, dann wird eine weitere Abfrage im Abfrageschritt 115 durchgeführt. Beispielsweise kann ein fünfter Sensor S5 eingesetzt werden, um festzustellen, ob während des Transports die Vorderkante des Briefes B den Bereich des fünften Sensors S5 erreicht hat bzw. ob der Brief B bereits aufgrund der Schwerkraftwirkung abkippt.

Alternativ kann bei bekannter Länge des Briefes auch ohne eine weiteren Sensor festgestellt werden, wie weit der Brief B bereits transportiert worden ist. Dann wird eine alternative Abfrage im Abfrageschritt 115 durchgeführt. Wenn die Vorderkante des Briefes B den Bereich des fünften Sensors S5 erreicht, dann ist der Brief B bereits weit genug transportiert worden und eine Umschaltung auf einen halbdynamischen Modus wird im Schritt 116 durchgeführt. Anderenfalls wird auf den Beginn des Abfrageschritts 111 zurückverzweigt.

Nach einer Umschaltung auf einen halbdynamischen Modus im Schritt 116 erfolgt ein Hinzuschalten der Abzugsvor-richtung im Schritt 117 und ein Stoppen des Brieftransports in der dynamischen Waage im Schritt 118 bevor ein Schritt 119 erreicht wird, in welchem ein Rücktransport des Briefes B von der Abzugsvorrichtung zur Wiegeinheit der schnellen dynamischen Waage erfolgt. Der erste Motor M1 der Wiegeinheit und der zweite Motor M2 bzw. dritte Motor M3 der Abzugsvorrichtung werden entsprechend angesteuert, um die Transportrichtung umzukehren. Wenn der Brief auf der Wiegeinheit mittig platziert ist, wird ein statisches Wägen des Briefes im Schritt 120 durchgeführt. Im Ergebnis liegt nunmehr ein Wägeergebnis vor.

Anschließend wird im Schritt 121 der Brief wieder in die Transportrichtung z transportiert und der Beginn des Abfrageschritts 108 wird erneut erreicht. Die Schritte 109 und 110 werden erneut durchlaufen, bevor im Abfrageschritt 111 festgestellt wird, dass bereits der Wägevorgang für den Brief B beendet worden ist. Die Schritte 112 und 113 werden durchlaufen und der Brief B verlässt die Abzugsvorrichtung poststromausgangsseitig. Das Ende des Ablaufes ist im Schritt 114 erreicht.

Die Abzugsvorrichtung kann in einem dynamischen Wiegemodus und in einem halbdynamischen Wiegemodus betrieben werden, wobei die Umschaltung vom dynamischen auf den halbdynamischen Wiegemodus automatisch erfolgt.

Außerdem können die Wiegeeinheit und Abzugsvorrichtung in einem Modus ohne Wiegen umgeschatet und dabei folgendermaßen gesteuert werden:

- Zuführung und Transport des Briefes B auf der Wiegeeinheit in Transportrichtung (wie im Schritt 102),
- Abfragen, ob während des Transports die Hinterkante des Briefes B den Bereich des zweiten Sensors S2 verläßt (wie im Abfrageschritt 105) und In dem Falle, wenn festgestellt wurde, dass die Hinterkante des Briefes B den Bereich des zweiten Sensors S2 verläßt, wird (wie im Schritt 107) eine Meldung generiert und an die automatische Zuführstation ausgegeben, damit (wie im Schritt 102) ein Folgebrief Bn zugeführt wird,
- Abfragen, ob die Briefvorderkante des Briefes B den Sensor S3 erreicht hat (wie im Abfrageschritt 108),
- Wegschalten der Abzugsvorrichtung in der Art, dass der Brief B berührungslos in die Abzugsvorrichtung einfahren kann (wie im Schritt 109),
- Abfragen, ob die Briefvorderkante des Briefes B den Sensor S4 erreicht hat (wie im Abfrageschritt 110),
- Hinzuschalten der Abzugsvorrichtung (wie im Schritt 112) und
- Transport des Briefes durch die Abzugsvorrichtung hindurch und heraus (wie im Schritt 113).

Eine Beendigung des Wiegevorgangs braucht nicht berücksichtigt zu werden, dementsprechend entfällt auch das halbautomatische Nachwiegen.

In der bevorzugten Lösungsvariante wird zur Lösung der Aufgabenstellung davon ausgegangen, dass die Transportgeschwindigkeit v für Poststücke der schnellen dynamischen Waage vorzugsweise gleich der Systemgeschwindigkeit ist. Damit ergibt sich der Vorteil, dass die Vereinzelungssicherheit der automatischen Zuführstation (Feeder) weiterhin gegeben ist, die im Poststrom der schnellen dynamischen Waage vorangehend angeordnet ist. In der automatischen Zuführstation, der schnellen dynamischen Waage und einer im Postweg nachgeschalteten Frankiermaschine sind auf die derzeitige Systemgeschwindigkeit abgestimmte und abgesicherte Komponenten enthalten, wie Motoren und Getriebe bestimmter Leistungen und Dauerhaltbarkeit. Weitere Lösungsvarianten mit höherer Systemgeschwindigkeit sollen aber damit nicht ausgeschlossen werden, die den Durchsatz zusätzlich steigern können. Die vorgenannten Komponenten müssten lediglich entsprechend angepasst werden, wenn die Systemgeschwindigkeit erhöht werden würde.

Wenn die Systemgeschwindigkeit für ein Frankiersystem erhöht werden soll, sind die Beschränkungen in der Berechnungsgeschwindigkeit, insbesondere der Abrechnungszeit für Frankierabdrucke im dynamischen Wiegemodus ebenfalls zu berücksichtigen.

Die Länge einer verkürzten Wiegeeinheit ergibt sich nur ungenau aus theoretischen Erwägungen, wie durch Addition einer ersten Brieflänge und einer zweiten Länge, die sich aus dem Produkt aus der Transportgeschwindigkeit und der Messzeit für den längsten Brief ergibt. Die praktisch notwendige Länge der verkürzten Wiegeeinheit lässt sich jedoch nur durch Versuche ermitteln, denn beim reellen Briefabstand kommt noch der Abstand d0 der Briefvorderkante des Folgebriefs Bn zur Wiegeeinheit sowie eine konstante Länge $L_{const}$ aufgrund von Zeitverzögerungen durch Reaktionszeiten des Frankiersystems aufgrund der Verarbeitungszeiten von Software-Meldungen und die Zeiten für Beschleunigungsstrecken hinzu.

Die Abzugsvorrichtung kann unterschiedlich zu den oben bereits beschriebenen Ausführungsvariantem aufgebaut sein. Die Abzugsvorrichtung nach der Ausführungsvariante (Fig.3) kann einfach auch an solche dynamische Waagen angepasst werden, welche auf der flachen Seite liegende Briefe in einer horizontalen Richtung transportieren.

Aus den Ausführungen zu einem Frankiersystem für Poststücke und daraus, dass keine weiteren Ausführungsbeispiele beschrieben wurden, sollte nicht gefolgert werden, dass die Erfindung allein für ein Frankiersystem anwendbar ist. Dann und bei einer veränderten Systemgeschwindigkeit sind evtl. auch andere Längenverhältnisse zwischen Wiegeeinheit und Abzugsvorrichtung möglich. Selbst bei gleichbleibenden Längenspektrum von 140 mm bis 353 mm würde die für das Wägen wirksame Länge der Wiegeeinheit bei einer erhöhten Systemgeschwindigkeit und bei einer zur Bestimmung des Gewichts gleich bleibenden Messzeit größer ausfallen und umgekehrt kleiner ausfallen bei einer verringerten Systemgeschwindigkeit.

Die Wiegeeinheit und die Abzugsvorrichtung können an die Abmessungen von Stückgütern angepasst eine Anordnung in separaten Gehäusen erfordern.

Die Erfindung ist nicht auf die vorliegenden Ausführungsform beschränkt, da offensichtlich weitere andere Ausführungen der Erfindung entwickelt bzw. eingesetzt werden können, die - vom gleichen Grundgedanken der Erfindung ausgehend - von den anliegenden Schutzansprüchen umfasst werden.

**Patentansprüche**

1. Schnelle dynamische Waage, mit einer Wiegeeinheit (20), bestehend aus einer Wiegezelle (204) und aus einem Transportmechanismus mit einem ersten Motor (M1) zum Antrieb desselben, wobei der Transportmechanismus mit dem Motor (M1) auf der Wiegezelle angeordnet ist, wodurch die Wiegezelle mit einer Vorlast belastet wird, mit einem ersten Sensor (S1) am Beginn der Wiegeeinheit, der ein erstes Signal an eine Steuereinheit (22) abgibt, welche den Wägevorgang für ein Stückgut (B) startet, einem zweiten Sensor (S2) der ein zweites Signal an die Steuereinheit (22) abgibt, welche eine Mitteilung erzeugt, dass ein auf das Stückgut (B) folgendes Stückgut (Bn) zugeführt werden kann, **gekennzeichnet dadurch, dass**

   - eine Wiegeeinheit (20) mit einer für das Wiegen wirksamen verkürzten Länge ($L_w$) vorgesehen wird, wobei durch die Verkürzung der Länge ($L_w$) der Abstand zwischen aufeinander folgenden Stückgütern entsprechend verkürzt ist,
   - eine schaltbare Abzugsvorrichtung (21, 24), welche in Transportrichtung nach der Wiegeeinheit (20) angeordnet ist und die es durch ihre Länge und Positionierung erlaubt, sowohl die kürzesten, als auch die längsten Stückgüter von der Wiegeeinheit (20) abzuziehen und weiter zu transportieren sowie
   - die Steuereinheit (22) zum Steuern des Stückguttransports mittels eines dritten Motors M3 der Abzugsvorrichtung und zum Steuern der Abzugsvorrichtung in Abhängigkeit von der Länge des Stückgutes und von der Beendigung der Gewichtsermittlung im Ergebnis des Wägens ausgebildet ist, wobei die Abzugsvorrichtung mittels eines Aktors schaltbar ist.

2. Schnelle dynamische Waage, nach Anspruch 1, **dadurch gekennzeichnet, dass** sich die Länge der schaltbaren Abzugsvorrichtung (21, 24) und deren Positionierung sich dadurch ergibt, dass die Abzugsvorrichtung (21, 24) stromabwärts der in der Länge verkürzten Wiegeeinheit (20) im Gehäuse der dynamischen Waage angeordnet sind.

3. Schnelle dynamische Waage, nach den Ansprüchen 1 bis 2, **dadurch gekennzeichnet, dass** stromabwärts unmittelbar nach der verkürzten Wiegeeinheit eine schaltbare Abzugsvorrichtung (21) angeordnet ist, welche durch die Steuereinheit steuerbar zum Öffnen und Schließen ausgebildet ist und die Stückgüter an der flachen Seite greift sowie dazu ausgebildet ist, um letztere weiter zu transportieren und dass der Aktor ein zweiter Motors (M2) zum Öffnen und Schließen der schaltbaren Abzugsvorrichtung (21) ist.

**4.** Schnelle dynamische Waage, nach den Ansprüchen 1 bis 2, **dadurch gekennzeichnet, dass** stromabwärts unmittelbar nach der verkürzten Wiegeeinheit eine schaltbare Abzugsvorrichtung (24) angeordnet, welche durch die Steuereinheit steuerbar vom Stückgut weg schwenkbar und an das Stückgut heran schwenkbar und dazu ausgebildet ist, um letzteres weiter zu transportieren und dass der Aktor ein vierter Motors (M4) zum Weg- und Zuschalten der schaltbaren Abzugsvorrichtung (24) ist.

**5.** Schnelle dynamische Waage, nach den Ansprüchen 1 bis 3 oder 4, **dadurch gekennzeichnet, dass** die Sensoren (S1, S2) und der erste Motor (M1) sowie die Wiegezelle (204) und weitere Sensoren (S3, S4) und weitere Motoren (M2 und M3 oder M4) sowie ein I/O-Interface (23) zur Ein- und Ausgabe von Daten mit der Steuereinheit (22) mess- und steuerungsmäßig sowie kommunikativ verbunden sind.

**6.** Schnelle dynamische Waage, nach einem der vorhergehenden Ansprüche 1 bis 5, **dadurch gekennzeichnet, dass** die schnelle dynamische Waage ein Bestandteil eines Postverarbeitungssystems mit einer Frankiermaschine ist und dass das Stückgut ein Poststück ist.

**7.** Schnelle dynamische Waage, nach Anspruch 6, **dadurch gekennzeichnet, dass** stromaufwärts die in der Länge verkürzte Wiegeeinheit (20) in einem Abstand d0 von einer automatischen Zuführstation angeordnet ist, welche Poststücke zur dynamischen Waage zuführt, wobei im Poststückspektrum Briefe unterschiedlicher Länge auftreten, wobei das Briefspektrum auch Briefe umfasst, die eine minimale Brieflänge $L_{Bmin}$ aufweisen, dass der zweite Sensor (S2) von dem ersten Sensor (S1) am Einlauf der Wiegeeinheit (20) mit einem ersten Abstand d1 beabstandet ist und der zweite Sensor (S2) von der Achse (2020) der zweiten Laufrolle am Auslauf der Wiegeeinheit (20) mit einem zweiten Abstand d2 beabstandet ist, wobei sich die für das Wiegen wirksame Länge Lw der verkürzten Wiegeeinheit (20) aus der Summe beider Abstände d1 und d2 ergibt, wobei gilt:

$$d1 = Lw - d2 \qquad\qquad\qquad (1)$$

und

$$d2 = d0 + L_{Bmin} \qquad\qquad\qquad (2)$$

mit d0 = 48 mm, $L_{Bmin}$ = 140 mm und Lw = 300 bis 360 mm, sowie dass ein dritter Sensor (S3) in einem dritten Abstand d3 in Transportrichtung hinter dem Auslauf der Wiegeeinheit unmittelbar vor der Abzugsvorrichtung und sowie dass ein vierter Sensor (S4) in der Abzugsvorrichtung in einem vierten Abstand d4 in Transportrichtung vom dritten Sensor (S3) angeordnet ist, wobei der dritte Abstand d3 im Bereich von 0 bis 50 mm und der vierte Abstand d4 im Bereich von 20 bis 80 mm liegt.

**8.** Schnelle dynamische Waage, nach einem der vorhergehenden Ansprüche 1 bis 7, **dadurch gekennzeichnet, dass** stromabwärts der Wiegeeinheit in der Abzugsvorrichtung ein fünfter Sensor (S5) in einem fünften Abstand hinter dem vierten Sensor (S4) vorgesehen ist, der mit der Steuereinheit (22) verbunden ist, um mittels der Steuereinheit (22) ermitteln zu können, wieweit der Brief B in die Abzugsvorrichtung hinein transportiert worden ist.

**9.** Schnelle dynamische Waage, nach einem der vorhergehenden Ansprüche 1 bis 7, **dadurch gekennzeichnet, dass** die automatische Zuführstation zur Längenmessung des Poststücks ausgebildet ist und schnittstellenmäßig mit der Steuereinheit (22) verbunden ist, und dass die Steuereinheit (22) dazu ausgebildet ist, um rechnerisch ermitteln zu können, ob der Brief B eine definierte Wegstrecke in die Abzugsvorrichtung hinein transportiert worden ist.

**10.** Verfahren zur Steuerung einer schnellen dynamischen Waage, mit einer Abgabe einer Mitteilung, wenn ein Stückgut zu der Wiegeeinheit zugeführt werden kann, mit einem durch einen ersten Sensor (S1) signalisiertes Starten und mit einem Überwachen des Wägevorganges des zu wägenden Stückguts (B), mit einem Starten der Zuführ eines nachfolgenden Stückgutes (Bn) zu der Wiegeeinheit, wobei das nachfolgende Stückgut (Bn) dann zu der Wiegeeinheit zugeführt wird, wenn die Hinterkante des zuvor zugeführten Stückgutes (B) eine Mindest-Auslöseposition an einem zweiten Sensor (S2) erreicht hat und der Wägevorgang für das Stückgut (B) beendet ist, **gekennzeichnet durch** die Schritte:

- Transport eines Stückgutes (B) nacheinander auf der Wiegeeinheit (20) und in einer schaltbaren Abzugsvorrichtung (21, 24), wobei die Wiegeeinheit (20) eine für das Wiegen wirksame verkürzte Länge ($L_w$) aufweist,
- Steuerung der Abzugsvorrichtung, um letztere wegzuschalten (Schritt 109), damit ein Stückgut (B) berührungslos in die Abzugsvorrichtung einfahren kann, wenn die Vorderkante des Stückgutes (B) einen dritten Sensor (S3) erreicht (Abfrageschritt 108), der im Abstand hinter dem Auslauf der Wiegeeinheit unmittelbar vor der Abzugsvorrichtung angeordnet ist,
- Steuerung der Abzugsvorrichtung, um letztere hinzuzuschalten (Schritt 112), damit ein Stückgut (B) **durch** die Abzugsvorrichtung hinduch transportiert werden kann, wenn die Vorderkante des Stückgutes (B) eine Mindest-Zuschaltposition an einem vierten Sensor (S4) erreicht hat (Abfrageschritt 110) und der Wägevorgang des Stückgutes (B) beendet ist (Abfrageschritt 111),

**11.** Verfahren, nach Anspruch 10, **gekennzeichnet, durch** ein Umschalten von einem dynamischen in einen halbdynamischen Wiegemodus, wenn der Wägevorgang des Stückgutes (B) noch nicht beendet und wenn das Stückgut (B) eine definierte Wegstrecke in die Abzugsvorrichtung hinein transportiert worden ist (Abfrageschritt 115), wobei die in den halbautomatischen Wägemodus umgeschaltete (Schritt 116) dynamische Waage folgende Schritte ausführt:

a) Hinzuschalten der Abzugsvorrichtung (Schritt 117),
b) Stoppen des Stückguttransports in der Waage (Schritt 118),
c) Zurücktransport des Stückgutes (B) auf die Wiegeeinheit (Schritt 119),
d) Statisches Wägen des Stückgutes (Schritt 120),
e) Weitersteuerung der Wiegeeinheit und der Abzugsvorrichtung zum Auswurf des Stückgutes (B).

**12.** Verfahren, nach Anspruch 11, **dadurch gekennzeichnet, dass** zur Weitersteuerung der Wiegeeinheit folgende Schritte durchgeführt werden:

- Start des Transports des Stückgutes (B) auf der Wiegeeinheit in Transportrichtung (Schritt 121),
- Abfragen, ob während des Transports die Hinterkante des Stückgutes (B) den Bereich des zweiten Sensors (S2) verläßt (Abfrageschritt 105) und in dem Falle, wenn festgestellt wurde, dass die Hinterkante des Stückgutes (B) den Bereich des zweiten Sensors (S2) verläßt, wird (Schritt 107) eine Meldung generiert und an die automatische Zuführstation ausgegeben, damit ein nachfolgendes Stückgut (Bn) zugeführt wird (Schritt 102).

**13.** Verfahren, nach Anspruch 11, **dadurch gekennzeichnet, dass** zur Weitersteuerung der Abzugsvorrichtung folgende Schritte durchgeführt werden:

- Abfragen, ob die Briefvorderkante des Stückgutes (B) den Sensor (S3) erreicht hat (Abfrageschritt 108),
- Wegschalten der Abzugsvorrichtung in der Art, dass das Stückgut (B) berührungslos in die Abzugsvorrichtung einfahren kann (Schritt 109),
- Abfragen, ob die Briefvorderkante des Stückgutes (B) den Sensor (S4) erreicht hat (Abfrageschritt 110),
- Hinzuschalten der Abzugsvorrichtung (Schritt 112) und
- Transport des Stückgutes durch die Abzugsvorrichtung hindurch und heraus (Schritt 113).

Fig. 1    Prior Art

Fig. 2

EP 2 360 458 A2

**Fig. 3**

**Fig. 4**

Fig. 5

Fig. 6a

Fig. 6b

EP 2 360 458 A2

**Fig. 6c**

**Fig. 7a**

**Fig. 7b**

101 — Start    100

102 — Brief wird zugeführt

107 — Ausgabe einer Mitteilung an die automatische Zuführeinheit

103 — Briefhinter-kante am Sensor S1 ?    nein
ja

104 — Start des Wägevorgangs

105 — Briefhinter-kante am Sensor S2 ?
nein    ja

121 — Start des Brieftransports der Waage

106 — Wägevorgang beendet ?    nein
ja

108 — Briefvorder-kante am Sensor S3 ?    nein
ja

120 — Statisches Wägen des Briefs

109 — Abzugsvorrichtung wird weggeschaltet

119 — Rücktransport des Briefs auf d.Wiegeeinheit

110 — Briefvorder-kante am Sensor S4 ?    nein
ja

111 — Wägevorgang beendet ?    nein

115 — Briefvorder-kante am Sensor S5 ?    nein
ja    ja

112 — Hinzuschalten der Abzugsvorrichtung

116 — Umschaltung auf halbautomatischen Modus

113 — Brief wird aus Waage heraus transportiert

117 — Hinzuschalten der Abzugsvorrichtung

114 — Ende

118 — Stoppen des Brieftransports der Waage

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 974819 B1
- EP 2017589 A2
- US 20090008859 A1
- EP 2065686 A1
- US 20090139777 A1